# EUROPEAN PATENT SPECIFICATION

(11) **EP 3 819 662 B1**
(45) Date of publication and mention of the grant of the patent: **04.03.2026**
(21) Application number: 19208020.8
(22) Date of filing: 08.11.2019
(51) Int. Cl.: G01S 7/35, G01S 13/34, G01S 13/44, G01S 13/58, G01S 13/931

(54) **A VEHICLE RADAR WITH FREQUENCY DIVERSITY**
FAHRZEUGRADAR MIT FREQUENZDIVERSITÄT
RADAR DE VÉHICULE AVEC DIVERSITÉ DE FRÉQUENCES

(43) Date of publication of application: 12.05.2021
(73) Proprietor: Magna Electronics Sweden AB, 447 37 Vårgårda (SE)
(72) Inventor: Moss, Jonathan, 85716 Unterschleissheim (DE); Lore, Pascal, Yokohama, 222-0033 (JP); Marsch, Sebastian, 97464 Niederwerrn (DE); Fuchs, Martin, 85716 Unterschleissheim (DE); Klotzbuecher, Dirk, 97464 Niederwerrn (DE); Lefevre, Andreas, 97464 Niederwerrn (DE); Jenkins, Alan, 85716 Unterschleissheim (DE); Goelz, Hansjerg, 85716 Unterschleissheim (DE)
(74) Representative: Westpatent AB

(56) References cited:
- EP-A1- 3 502 732
- DE-A1- 102017 223 429
- LEATHERWOOD D A ET AL: "Waveform selection for spaceborne sparse aperture MTI radar", AEROSPACE CONFERENCE, 2004. PROCEEDINGS. 2004 IEEE, IEEE, PISCATAWAY, NJ, USA, 6 March 2004 (2004-03-06), pages 1911 - 1921, XP010748307, ISBN: 978-0-7803-8155-1, DOI: 10.1109/AERO.2004.1367974

## Description

The present disclosure relates to radar transceivers and in particular to techniques for detecting small complex targets with limited complexity radar transceivers. The radar systems discussed herein are suitable as vehicle radar systems.

A radar transceiver is a device arranged for transmission and reception of radar signals in a radar frequency band. Radar transceivers are commonly used in vehicles for monitoring vehicle surroundings. Automatic Cruise Control (ACC) functions, Emergency Braking (EB) functions, Advanced Driver Assistance Systems (ADAS) and Autonomous Drive (AD) are some examples of applications where radar data represents an important source of information on which vehicle control is based.

A well-known type of radar transmission format is the frequency modulated continuous wave (FMCW) format. This type of radar waveform comprises a 'chirp' signal of linearly increasing or decreasing frequency. Typically, an FMCW radar transceiver transmits multiple consecutive chirps in a saw-tooth like pattern, where the down-mixed return signal from a target will be processed with a two-dimensional (2D) fast Fourier transform (FFT) to create a matrix of complex amplitudes where each matrix element corresponds to a given range and target speed, or Doppler frequency shift. By identifying local maxima in this matrix above a defined threshold, detections can be extracted from this matrix, each with an associated range and speed. This is normally referred to as the detection phase and is then followed by the angle of arrival estimation phase, where the phases of the receiver antennas are processed. An FMCW radar transceiver normally operates in cycles, where each cycle comprises a detection phase.

The benefits of using FMCW radar waveforms are well known for automotive radar systems. An FMCW-based radar transceiver can cost efficiently support wide band performance, such as 1GHz sweeps, to deliver the capability to resolve two targets that are only on the order of 20cm in radial separation. The 77GHz radar band provides a worldwide 1GHz bandwidth allocation for such radar systems, which is an advantage when it comes to production volumes. FMCW radar transceivers also normally produce highly constrained frequency spectra, allowing efficient use of the available bandwidth, which is a further advantage.

A challenge in most radar systems is to detect targets associated with a small radar cross-section (RCS), since they tend to generate very weak reflections that are difficult to detect in noise. Also, some targets are complex in the sense that they give rise to multiple reflections that are closely spaced in range, which may complicate target detection.

DE 102017223429 A1 relates to determining a property of an object by transmitting fast-chirp-modulated radar signals by means of a number of transmission channels and receiving corresponding reflected signals by means of a number of receiving channels. Doppler signals of received signals are compensated with respect to different center frequencies of the transmission channels and a Fourier transformation is carried out on the compensated Doppler signals.

The document "Waveform selection for spaceborne sparse aperture MTI radar" (LEATHERWOOD D A ET AL; AEROSPACE CONFERENCE, 2004. PROCEEDINGS. 2004 IEEE, IEEE, PISCATAWAY, NJ, USA, 6 March 2004 (2004-03-06), pages 1911-1921) relates to spaceborne radar devices where waveform selection is applied to sparse arrays. Frequency diversity is achieved by transmitting waveforms at transmit frequencies that vary sufficiently so that the spectra or the waveforms are non-overlapping. To ensure that the returns are integrated at the same Doppler velocity, the transmit pulse repetition frequency (PRF) is changed for each waveform such that constant width Doppler velocity bins are obtained.

EP 3502732 Al discloses a radar unit for detecting an existence of interference, including a transceiver configured to radiate a transmit radar signal and receive an echo signal thereof. An interference detection unit is configured to monitor a whole or a portion of a radar frequency band supported by the radar unit and identify, from a received interference signal, an arrival direction of the identified interference and a level of interference and output an interference detected signal.

It is an object of the present disclosure to provide improved vehicle radar transceivers of low complexity capable of detecting small complex targets. According to the claimed invention this object is at least partly obtained by a vehicle radar transceiver for a vehicle (100) travelling on a road, arranged to transmit a first waveform in a first frequency band, and a second waveform in a second frequency band different from the first frequency band, wherein the second waveform is configured to be scaled in the time domain compared to the first waveform by an amount corresponding to a difference in wavelength between the first and the second frequency bands, thereby compensating for a difference in phase evolution of a target reflection over time for the first waveform compared to the second waveform. The first waveform and the second waveform are frequency modulated continuous wave (FMCW) chirp sequences.

This way frequency diversity is obtained without requiring complex operations such as interpolation and re-sampling. The detectability of complex targets is improved, and the resilience to interference is also improved due to the frequency diversity. The techniques disclosed herein can be generalized in a straightforward manner to comprise more than two waveforms transmitted in respective frequency bands. For instance, the radar transceiver can be arranged to also transmit a third waveform in a third frequency band, wherein the third waveform is configured to be scaled in the time domain compared to the first waveform by an amount corresponding to a difference in wavelength between the first and the third frequency bands, thereby compensating for a difference in phase evolution of a target reflection over time for the first waveform compared to the third waveform.

This way the system obtained the benefits associated with FMCW discussed above.

According to the claimed invention, furthermore, the second waveform is configured to be scaled in the time domain by an increased frequency derivative of the FMCW chirp transmission compared to the first waveform, and/or by a reduction in transmission bandwidth compared to the first waveform.

According to some aspects, the second waveform can also be configured to be scaled in the time domain by an increased sampling rate of the FMCW chirp transmission compared to the first waveform and/or by a reduction in a time gap duration between consecutive transmissions. Thus, there are many options for efficiently implementing the required time domain scaling with limited complexity. It is an advantage that the different methods of time domain scaling can be combined freely.

According to aspects, the radar transceiver is arranged to determine a first Range-Doppler matrix based on receiving the first waveform, and to determine a second Range-Doppler matrix based on receiving the second waveform, and to obtain a target detection based on the first Range-Doppler matrix and on the second Range-Doppler matrix. This joint processing of the two or more Range-Doppler matrices is made less complex by the alignment of the Doppler range bins due to the time domain scaling, which is an advantage.

According to aspects, the radar transceiver is arranged to obtain the target detection based on the first Range-Doppler matrix and on the second Range-Doppler matrix by selecting the matrix element associated with most energy out of the first Range-Doppler matrix and the second Range-Doppler matrix for each Range-Doppler matrix element. This selection combining can be implemented with low complexity, which is an advantage.

According to aspects, the radar transceiver is arranged to obtain the target detection based on the first Range-Doppler matrix and on the second Range-Doppler matrix by a weighted combination of respective matrix entries from the first Range-Doppler matrix and the second Range-Doppler matrix. This weighted combination provides improved performance in terms of noise resilience, and detection performance, which is an advantage.

According to aspects, the radar transceiver comprises a plurality of antenna elements configured in an antenna array, wherein the radar transceiver is arranged to determine an angle of arrival associated with a detected target based on the a first waveform, on the second waveform and on respective SNRs of the first and second waveform for the detected target. This way, angle of arrival estimation is improved by the frequency diversity. The improvement is obtained at reasonable complexity, which is an advantage.

According to aspects, a center frequency of the first frequency band and/or a center frequency of the second frequency band is varied over time. By varying the frequency of transmission, further frequency diversity is obtained.

There are also disclosed herein methods and vehicles associated with the above-mentioned advantages.

### BRIEF DESCRIPTION OF THE DRAWINGS

The present disclosure will now be described more in detail with reference to the appended drawings, where:
Figure 1 shows a schematic top view of a vehicle;
Figure 2 schematically illustrates a complex radar target;
Figures 3-4 are graphs illustrating target SNR vs. target range;
Figures 5-6 schematically illustrate example FMCW waveforms;
Figures 7A-B schematically show example Range-Doppler matrices;
Figure 8 shows an example control unit;
Figure 9 shows an example computer program product;
Figure 10 is a flow chart illustrating methods;
Figures 11-12 schematically show example FMCW waveforms; and
Figure 13 illustrates example radar transceiver processing.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

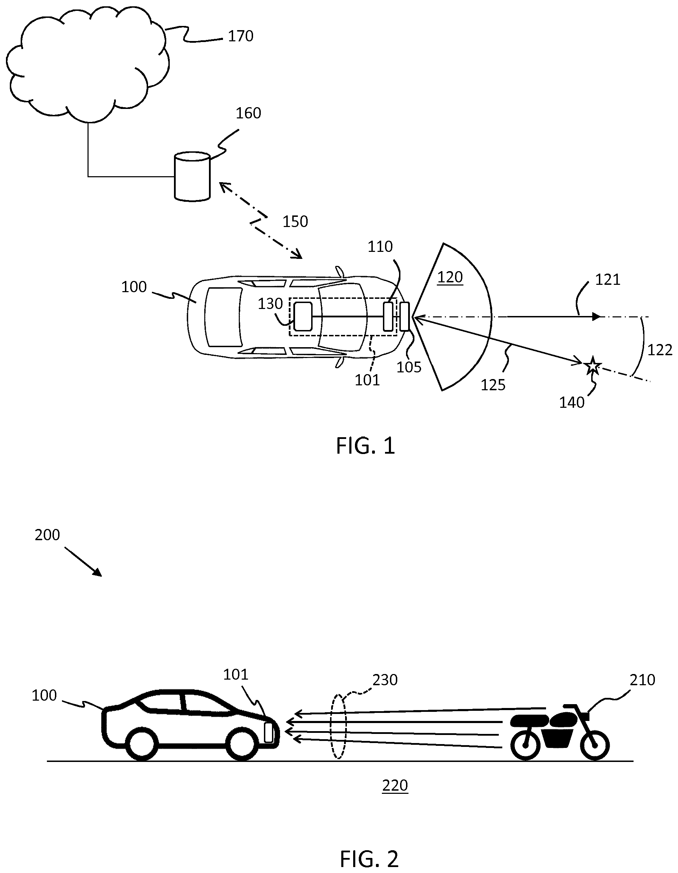

Figure 1 shows a vehicle 100 equipped with a vehicle radar transceiver 101. The transceiver 101 comprises a control unit 130 and one or more antenna ports 110 arranged to be connected to respective antennas 105. The antennas are normally referred to as an antenna array in case multiple antennas are used. The techniques disclosed herein can be used with single antenna systems as well as in system comprising one or more antenna arrays.

The control unit 130, the radar antenna port/ports 110, and the antenna or antennas 105 may be comprised in a single physical unit or they may be distributed over more than one physical unit. Some parts of the radar transceiver functionality may even be comprised in a remote server 160 or cloud-based resource 170 connected to the vehicle 100 via wireless link 150.

According to a claimed example, the vehicle radar transceiver 101 comprises a transceiver arrangement that is arranged for generating and transmitting radar signals in the form of frequency modulated continuous wave (FMCW) signals, sometimes also referred to as radar chirp signals, and to receive reflected radar signals 125, where the transmitted signals have been reflected by an object 140.

The radar transceiver 101 is associated with a field of view 120. In case the radar transceiver 101 is a front radar, a boresight direction 121 of the radar often coincides with a center line of the field of view 120. In case the vehicle radar is instead configured as a side radar or rear corner radar, then the boresight direction may point in some other angle compared to the forward direction of the vehicle 100.

As noted above, the vehicle radar system may be connected via wireless link 150 to a remote server 160, which in turn may be comprised in a cloud-based resource 170 or remote network. This server and network may be configured to assist the vehicle 100 in performing various operations such as radar signal processing, interference mitigation, beamforming, and the like. The spatial resolution of a radar transceiver, i.e., longitudinal and lateral resolution, may be improved by using a plurality of transmit and/or receive antennas in an antenna array. In particular, the resolution in angle 122 may be improved by the techniques disclosed herein. An antenna array also allows for estimating direction of arrival in a known manner.

Consider firstly a single target, this has an associated reflected amplitude and delay (corresponding to the distance to the target). The radio frequency (RF) phase of the radar waveform that is returned from the target is also related to the distance, it is in most cases given by distance divided by the wavelength at the center frequency of transmission and multiplied by pi. The target can thus be considered as a delay line with a single associated amplitude, delay, and phase.

However, some targets that are desirable to be detected reliably by an automotive radar comprise many scatter points that are closely separated radially, with separation less than the distance resolution possible from, **e.g.,** a 1GHz bandwidth chirp. These are referred to herein as complex targets. The signal reflected off a complex target and then received at the radar transceiver 101 can be modelled as the convolution of the transmitted waveform and the closely spaced scatter points. The signal received after down-conversion at the radar receiver is the convolution of the impulse response of the radar system with the complex "delay-line" targets.

The resulting signal received at the transceiver 101 can either be strong or weak corresponding to the relative distance, phases and amplitudes of the signal components generated by the different scatter points since the radar cannot resolve the individual reflection points. Measuring over multiple cycles will improve the chance of detection the complex target as the relative phases of the targets change slightly over time, however it is desirable to detect the target in each radar cycle. One may consider this as short term fading which exists in addition to the longer term fading experienced due to reflections from, e.g., the road surface.

Figure 2 schematically illustrates a radar scenario 200 comprising a complex target 210 which may be challenging to detect. The radar transceiver 101 emits a radar waveform, such as an FMCW waveform, and receives back a plurality of reflected signal components 230, each with a respective amplitude and phase, from a corresponding number of scattering points on the complex target 210. The different signal components 230 will add at the radar transceiver 101, and since the distance resolution of the transceiver is often not sufficient to distinguish the different components, the signal components will appear as a single aggregated component with an amplitude that is varying over frequency (due to the changing wavelength at different frequencies) and over distance (due to the relative changes in phase between the different signal components). The sum amplitude is often well modelled by a Rayleigh distribution, unless there is a dominating signal component, in which case a Rician distribution may provide a better model of the sum amplitude.

In order to minimize the chance of missing the detection within any one cycle, the techniques proposed herein involve dividing the available radar time into multiple sub-blocks at multiple center frequencies. The separate blocks can be processed separately, and each will incur an associated SNR reduction due to the reduced observation period. However, it is then possible to recombine the processed data back into a single block to recover as much of the lost SNR as possible.

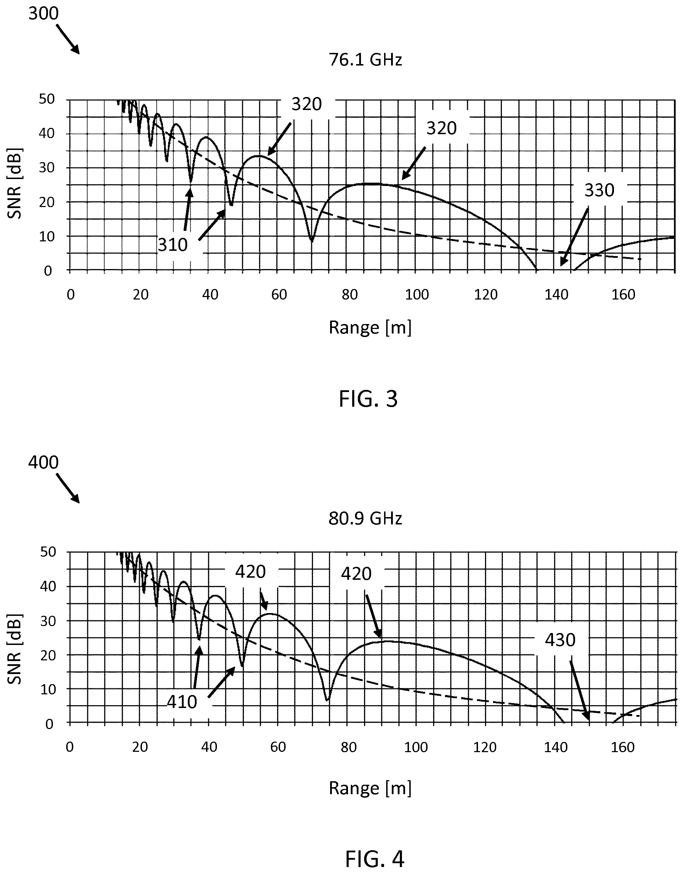

Figures 3 and 4 show examples of signal to noise ratio (SNR) in dB for a received radar waveform from a complex target as function of target range in meters. Figure 3 shows SNR for a first frequency band signal at a center frequency of 76.1 GHz, while Figure 4 shows SNR for a second frequency band signal at a center frequency of 80.9 GHz.

The average SNR in both cases of course decreases with distance due to normal path loss effects, shown in Figures 3 and 4 by the dashed lines. However, the signal components 230 from the complex target 210 also influence the SNR. This interaction is seen as a series of notches 310, 410 separated by peaks 320, 420. A notch 310, 410 is generated when the signal components 230 add mainly out of phase, i.e., destructively, while a peak 320, 420 results when the signal components add mostly in phase, i.e., constructively.

It is appreciated that signal detection is made more challenging at certain specific distances. For instance, for the examples in Figures 3 and 4, there is a deep notch around 140m. However, this notch is shifted in dependence of the center frequency. The notch 330 at 76.1 GHz is more or less centered around 140m, while the notch 430 at 80.9 GHz is shifted somewhat to be closer to 150m. This means that waveforms of different center frequency may be used with advantage when attempting to detect challenging complex targets, possibly also associated with a small RCS.

However, if the center frequency of the two waveforms are different, then this will result in the doppler bins of the Range-Doppler matrix not being aligned between the two waveforms. This makes association of the two Range-Doppler matrices more complicated and may require larger processing resources in the control unit 130. It is desired to minimize the required processing resources. In other words, one row of the Range-Doppler matrix of one waveform will translate to one relative velocity, while the same row in the Range-Doppler matrix of the other waveform will translate to another relative velocity. To perform joint processing of the two Range-Doppler matrices, some type of interpolation or re-sampling is then often necessary. Re-sampling or interpolation can be achieved in a relatively straight forward manner using, e.g., a Farrow filter or the like, but this operation drives complexity, and is therefore undesired.

To avoid re-sampling and/or interpolation operations of the Range-Doppler matrices, it is proposed herein that the timings of the two waveforms are adjusted such that the bins in the 2D Range-Doppler grid correspond to the same relative target speed regardless of the center frequency of the chirp. This may be accomplished either by changing the gap between the chirps such that the chirps see the same phase evolution of the target, by changing the time duration of each chirp, or by a combination of both changing the gap between the chirps and changing the time duration of each chirp.

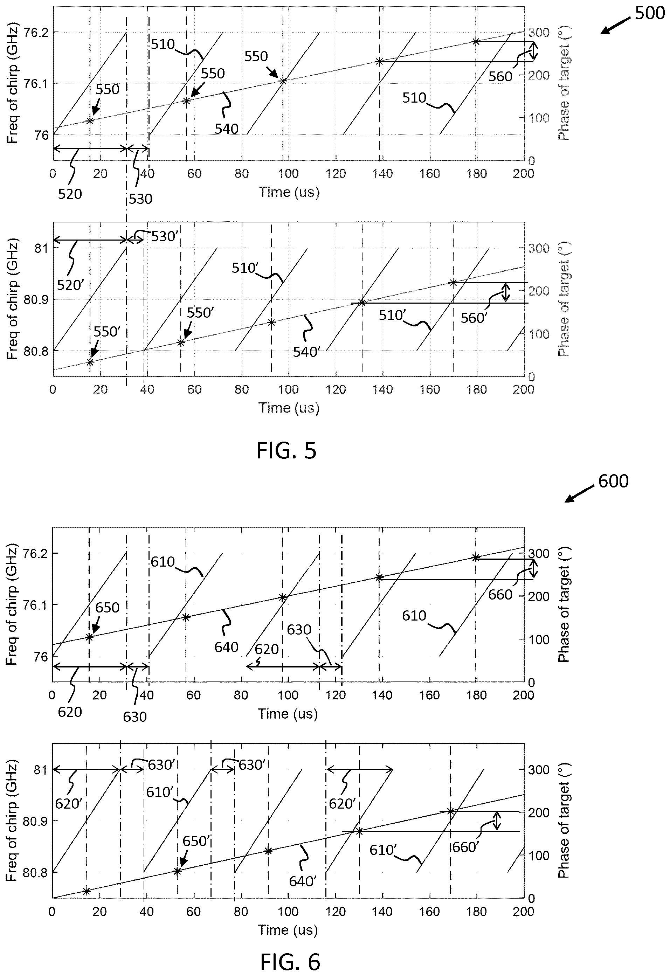

Figure 5 shows a not claimed example radar transmission scheme 500 where a first waveform 510 is transmitted in a first frequency band between 76 GHz and 76.2 GHz, and a second waveform 510' is transmitted in a second frequency band between 80.8 GHz and 81 GHz, i.e., different from the first frequency band. The chirp durations 520, 520' are the same for both the first and the second waveform. However, the time gap 530, 530' between adjacent chirps is different. The gap 530' for the higher frequency band waveform is smaller than the gap 530 for the lower frequency band, resulting in a scaling or compression in time domain of the second waveform 510 with respect to the first waveform 510'. Thus, Figure 5 illustrates an example transmission scheme where the second waveform 510' is configured to be scaled in the time domain by a reduction in a time gap duration between consecutive transmissions.

This scaling has an interesting consequence for the phase evolution 540 of a target over time, which can be obtained, e.g., as the phase at the time center 550, 550' of the chirp. The time scaling is performed by an amount corresponding to a difference in wavelength between the first and the second frequency bands, thereby compensating for a difference in the phase evolution 540 of a target reflection 125 over time for the first waveform compared to the second waveform. This means that the phase difference 560, 560' is the same for both waveforms between consecutive chirps. Since the phase difference is the same, the Doppler bins in the Range-Doppler matrix will be aligned for the two waveforms, despite the difference in center frequency. This simplifies detection processing by the control unit 130, at least since the control unit 130 need not implement an interpolation operation in order to align the different Doppler bins for the first and subsequent blocks of chirp measurements. Thus, complex re-sampling structures such as Farrow filters and the like is avoided by the disclosed technique, which is an advantage. Also, FFT operations are at their most efficient if applied to a set of signal samples that is a power of 2, i.e., 512, 1024, 2048, etc. The methods disclosed herein simplify processing since the number of samples for each waveform can be fixed to an even power of 2.

Figure 6 shows a claimed example radar transmission scheme 600 where a first waveform 610 is transmitted in a first frequency band between 76 GHz and 76.2 GHz, and a second waveform 610' is transmitted in a second frequency band between 80.8 GHz and 81 GHz, i.e., different from the first frequency band. Here the time gap 630, 630' between adjacent chirps is the same for both waveforms, but the frequency gradient of the chirp is instead higher for the second waveform 610' compared to the first waveform 610, which means that the chirp duration 620 for the first waveform 610 is longer compared to the chirp duration 620' for the second waveform. Thus, Figure 6 illustrates a radar transmission scheme in accordance with the present invention, wherein the second waveform 610' is configured to be scaled in the time domain by an increased frequency derivative of the FMCW chirp transmission compared to the first waveform 610. This increase in frequency derivative can optionally but efficiently be obtained by an increased sampling rate of the FMCW chirp transmission compared to the first waveform 610.

This can also be seen as a scaling of the waveform in time domain. The time scaling is again performed by an amount corresponding to a difference in wavelength between the first and the second frequency bands, thereby compensating for the difference in the phase evolution 640 of a target reflection 125 over time for the first waveform compared to the second waveform. The phase of a target reflection is again obtained as the phase at the center 650, 650' of the chirp. This again means that the phase difference 660, 660' is the same for both waveforms between consecutive chirps. Since the phase difference is the same, the Doppler bins in the Range-Doppler matrix will be aligned for the two waveforms, despite the difference in center frequency.

Of course, a waveform can be scaled in the time domain by a combination of changing gap duration and changing frequency derivative. Also, time scaling can be performed by increasing the sweep bandwidth, which effectively increases the chirp duration for a fixed frequency derivative.

To summarize, there is disclosed herein a vehicle radar transceiver 101 for a vehicle 100 travelling on a road, arranged to transmit a first waveform 510, 610 in a first frequency band f1, and a second waveform 510', 610' in a second frequency band f2 different from the first frequency band. The second waveform 510', 610' is configured to be scaled in the time domain compared to the first waveform 510, 610 by an amount corresponding to a difference in wavelength between the first f1 and the second f2 frequency bands, thereby compensating for a difference in phase evolution 540, 640 of a target reflection 125 over time for the first waveform compared to the second waveform.

The techniques disclosed herein can be generalized in a straightforward manner to comprise more than two waveforms transmitted in respective frequency bands. For instance, the radar transceiver can be arranged to also transmit a third waveform in a third frequency band, wherein the third waveform is configured to be scaled in the time domain compared to the first waveform by an amount corresponding to a difference in wavelength between the first and the third frequency bands, thereby compensating for a difference in phase evolution of a target reflection over time for the first waveform compared to the third waveform.

It is noted that the first frequency band and the second frequency band (and any further frequency bands) may be pre-determined and fixed frequency bands, or they can be varied in terms of, e.g., center frequency. For instance, the center frequency of one or both bands may follow a random or pseudo-random pattern. One or both frequency bands may also be shifted in frequency according to some pre-determined pattern, to e.g., to sweep a larger band over a super-frame time duration.

The amplitude or magnitude of the identified Range-Doppler cell can be used for providing a best estimate for angle of arrival. For example, if the Range-Doppler matrix at some center frequency F1 shows the target strongly at a range R1 and Doppler V1, then the phases from the receiver antennas at R1 and V1 should be used in preference to the phases from the other blocks. If the amplitudes are similar between all blocks at the different frequencies, then the angle of arrival should be averaged equally. The algorithm could thus be to estimate the angle of arrival of the target at R1, V1 individually at all frequencies, then average according to the associated SNR of each block.

The information of in which frequency blocks the target was detectable may be useful in object classification, and so can be provided to upper layers as an information field. The speed with which this information changes will be dependent on the speed of the target, the characteristics of the target and also the road surface reflectivity.

The availability of the larger amounts of radio spectrum from 76 GHz to 81GHz makes the herein disclosed method appealing. Using long chirps each of which encompass the full bandwidth is clearly an alternative, however this typically results in large repetition times between chirps and hence poor Doppler/speed measuring capability. It also requires many more sampling points for each chirp which increases the memory demands and lengths of the FFT processing. The methods proposed herein, on the other hand, offer robust detection of complex targets at an affordable implementation complexity, which is an advantage.

Furthermore, the first waveform 510, 610 and the second waveform 510', 610' are frequency modulated continuous wave FMCW chirp sequences.

According to some aspects, the second waveform 510', 610' is configured to be scaled in the time domain compared to the first waveform 510, 610 by a compression factor corresponding to a relative difference in center wavelength of the first frequency band f1 and the second frequency band f2. For instance, if the wavelength of the second waveform is reduced from 3.94mm (for the first waveform) to 3.71mm (for the second waveform), i.e. a reduction of 6%, then if the time gap for the first waveform is 10 us, the gap time for the second waveform should be reduced to 7.57us (a 6% decrease compared to the first waveform).

According to the claimed invention, and as a complement to scaling the second waveform by an increased frequency derivative of the FMCW chirp transmission compared to the first waveform 610 as described above, the time scaling is achieved by reducing the transmission bandwidth of the second waveform compared to the first waveform. This means that the time duration for completing a chirp is shorter for the second waveform, i.e., that more chirps can be completed in a given time interval, corresponding to a scaling in time domain.

It is well known that targets in a radar system can be detected by determining a first range FFT followed by a second Doppler FFT on the range FFT. The result of the two FFTs is a matrix where each matrix element corresponds to a given range and Doppler combination. A target at some distance moving with some relative velocity will appear as energy in the corresponding Range-Doppler matrix element in the matrix. This matrix element is often referred to as a Range-Doppler bin, following terminology from the Fourier processing area.

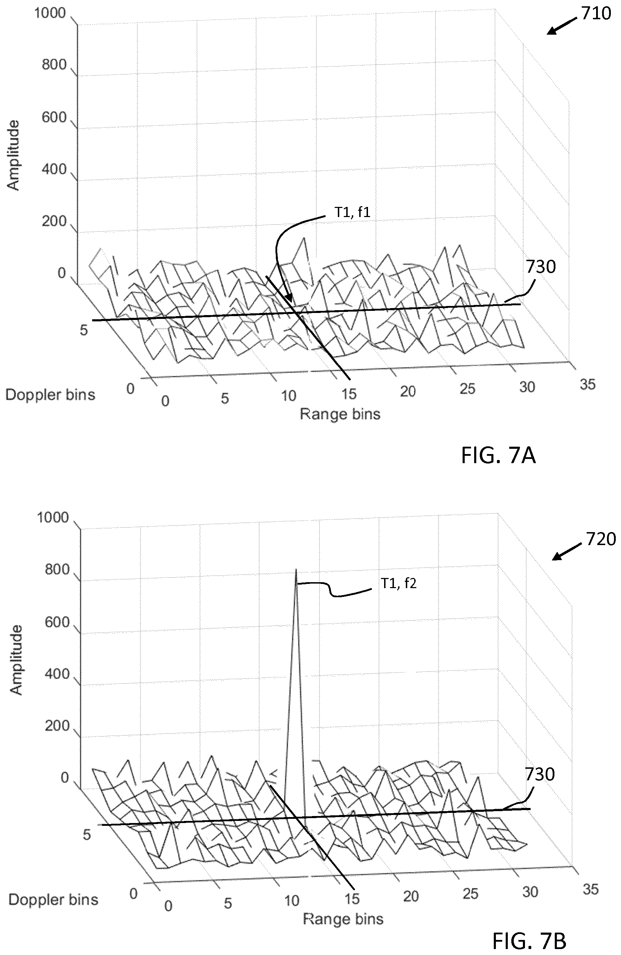

A Range-Doppler matrix is a matrix of complex values where each complex value is associated with a given target range (in meters) and relative radial target velocity with respect to the radar transceiver (in meters/second). The target range in meters and the relative velocity in meters/second corresponding to each element is determined from the transmission parameters of the radar waveform in a known manner. Figure 7A illustrates a first example Range-Doppler matrix 710 determined for the first waveform which is transmitted in a first frequency band f1. Figure 7B illustrates a second example Range-Doppler matrix 720 determined for the second waveform which was transmitted in a second frequency band f2 different from f1. Both Range-Doppler matrices comprise a detection of a complex target T1. However, due to the effects of fading discussed above, the received signal energy T1, f1 from the target T1 in the frequency band f1 is very small. It is therefore difficult to detect the target T1 given only the information in the Range-Doppler matrix 710.

The same target T1 is clearly visible in the second Range-Doppler matrix 720, due to the difference in frequency between the frequency band f1 and the frequency band f2.

It is noted that the target T1 appears in the same Doppler bin 730 in each of the first 710 and the second 720 matrix, despite the frequency difference between the first and the second waveform, thanks to the time scaling that has been performed to account for the frequency difference.

It has been realized that a more robust detection can be obtained if the radar transceiver 101 is arranged to determine a first Range-Doppler matrix 710 based on receiving the first waveform 510, 610, and to determine a second Range-Doppler matrix 720 based on receiving the second waveform 510, 610, and to obtain a target detection 140, T1, T2 based on the first Range-Doppler matrix 710 and on the second Range-Doppler matrix 720. I.e., by jointly processing the two Range-Doppler matrices to obtain a measure of frequency diversity. This joint processing is made more efficient since the Doppler row or bin 730 now corresponds to the same relative velocity as the Doppler row or bin 740, such that the values can be directly processed without prior interpolation operations or the like. In the same way, Doppler bins at row 750 correspond to the same relative target velocity as the Doppler bins at row 760.

The joint processing can be performed in a few different ways with varying complexity and performance. For instance, the radar transceiver 101 may optionally be arranged to obtain the target detection 140, T1, T2 based on the first Range-Doppler matrix 710 and on the second Range-Doppler matrix 720 by selecting the matrix element associated with most energy (or largest amplitude or absolute value) out of the first Range-Doppler matrix 710 and the second Range-Doppler matrix 720 for each Range-Doppler matrix element. Thus, the plurality of Range-Doppler magnitude matrices is aligned in the Doppler domain (thanks to the waveform scaling in time domain) and a 'select max' operation can be performed for all equivalent bins by, e.g., picking the element with the largest amplitude out of the first and the second Range-Doppler matrix. This will improve chances of detecting a given target, even it is only detectable in one cell. The noise from each bin would be enhanced since the maximum was being taken and this may result in a higher probability of false alarm.

Alternatively or as a complement to the detection processing above, the radar transceiver 101 may optionally be arranged to obtain the target detection 140, T1, T2 based on the first Range-Doppler matrix 710 and on the second Range-Doppler matrix 720 by a weighted combination of respective matrix entries from the first Range-Doppler matrix 710 and the second Range-Doppler matrix 720. According to an example, the bins in the Range-Doppler magnitude matrices are simply summed. This creates a more balanced approach to recover the SNR, without adding significant complexity to the implementation.

In a third example embodiment, the target phase for each target can be estimated based on the phase of each local maxima, thus allowing a pseudo coherent combination between the multiple Range-Doppler matrices. The phase between local maxima can be extrapolated such that the noise floor does not increase as much as if taking magnitudes whereas the targets will coherently combine.

This weighted combination optionally comprises weights determined in dependence of a signal to noise ratio, SNR, for each matrix element. I.e., the weighted combination can be performed in a manner similar to maximum ratio combining (MRC) where the combining is performed with weights determined based on relative SNRs.

The two different Range-Doppler matrices can also be used to improve direction of arrival estimation. According to some aspects, the radar transceiver 101 comprises a plurality of antenna elements configured in an antenna array 105, wherein the radar transceiver is arranged to determine an angle of arrival 122 associated with a detected target 140 based on the a first waveform 510, 610, on the second waveform 510', 610' and on respective SNRs of the first and second waveform for the detected target 140.

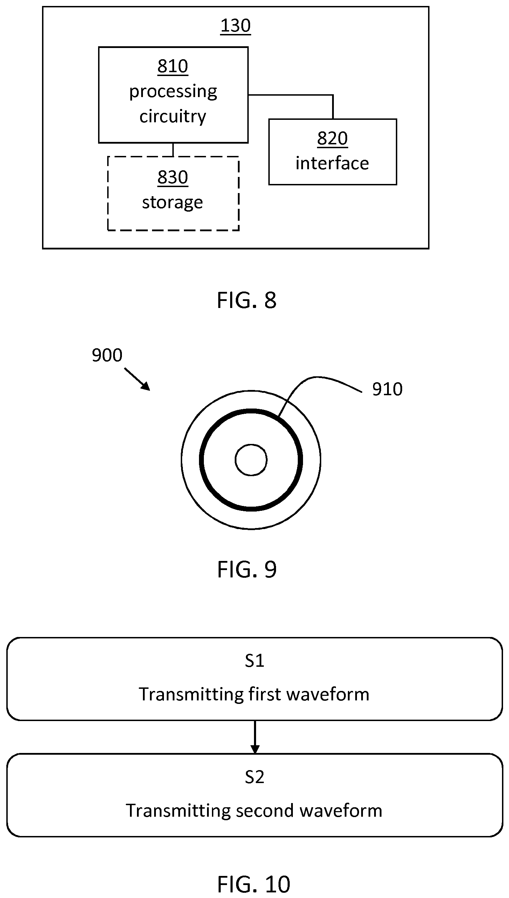

Figure 8 schematically illustrates, in terms of a number of functional units, the components of the control unit 130 according to an embodiment. Processing circuitry 810 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 830. The processing circuitry 810 may further be provided as at least one application specific integrated circuit (ASIC), or field programmable gate array (FPGA).

Particularly, the processing circuitry 810 is configured to cause the control unit 130 to perform a set of operations, or steps. These operations, or steps, were discussed above in connection to the various radar transceivers and methods. For example, the storage medium 830 may store the set of operations, and the processing circuitry 810 may be configured to retrieve the set of operations from the storage medium 830 to cause the control unit 130 to perform the set of operations. The set of operations may be provided as a set of executable instructions. Thus, the processing circuitry 810 is thereby arranged to execute methods and operations as herein disclosed.

The storage medium 830 may also comprise persistent storage, which, for example, can be any single one or combination of magnetic memory, optical memory, solid state memory or even remotely mounted memory.

The control unit 130 may further comprise a communications interface 820 for communications with at least one other unit. As such, the radar interface 820 may comprise one or more transmitters and receivers, comprising analogue and digital components and a suitable number of ports for wired or wireless communication.

The processing circuitry 810 is adapted to control the general operation of the control unit 130 e.g. by sending data and control signals to the external unit and the storage medium 830, by receiving data and reports from the external unit, and by retrieving data and instructions from the storage medium 830. Other components, as well as the related functionality, of the control unit 130 are omitted in order not to obscure the concepts presented herein.

Figure 9 shows a computer program product 900 comprising computer executable instructions 910 to execute any of the methods disclosed herein.

Figure 10 is a flow chart illustrating a method for detecting a target 140 by a radar transceiver 101. The method comprises transmitting S1 a first waveform 510, 610 in a first frequency band f1, and also transmitting S2 a second waveform in a second frequency band f2 different from the first frequency band, wherein the second waveform 510', 610' is configured to be scaled in the time domain compared to the first waveform 510, 610 by an amount corresponding to a difference in wavelength between the first f1 and the second f2 frequency bands, thereby compensating for a difference in phase evolution 540, 640 of a target reflection 125 over time for the first waveform compared to the second waveform, where the first waveform 510, 610 and the second waveform 510', 610' are frequency modulated continuous wave (FMCW) chirp sequences.

The second waveform 610' is configured to be scaled in the time domain by an increased frequency derivative of the FMCW chirp transmission compared to the first waveform (610), and/or
the second waveform 510' is configured to be scaled in the time domain by a reduction in transmission bandwidth compared to the first waveform.

The selection of center frequencies for each of the first and the second frequency band can be performed in a random or a pseudo-random fashion, since the target is equally likely to be detectable at any of the center frequencies. Alternatively, if the phases of the complex target are seen to change more slowly, the selection of the center frequency could be dependent on the results from the previous cycle. The radar transceiver can thus be arranged to 'search' for the target by varying transmission frequency in order to improve detection conditions.

Moreover, if a target at a given range and a relative velocity (i.e., a given Doppler) is not detected in a frequency band f1, then a large frequency jump may be desirable for the second frequency band f2 in order to maximize the chance of detecting it within the radar cycle.

The techniques discussed above have been mainly (but not entirely) focused on applying a time scaling to one or more of the transmitted waveforms in order to align Doppler bins of the respective Range-Doppler matrices. This avoids the need for complex signal processing operations involving re-sampling and/or interpolation of the Range-Doppler matrices. Interpolation and re-sampling also incur signal processing delays which may not be desirable.

However, if additional signal processing resources are available, and overall delay constraints on signal processing allow it, then interpolation in the Range-Doppler matrices may be feasible to perform in real-time during radar operation.

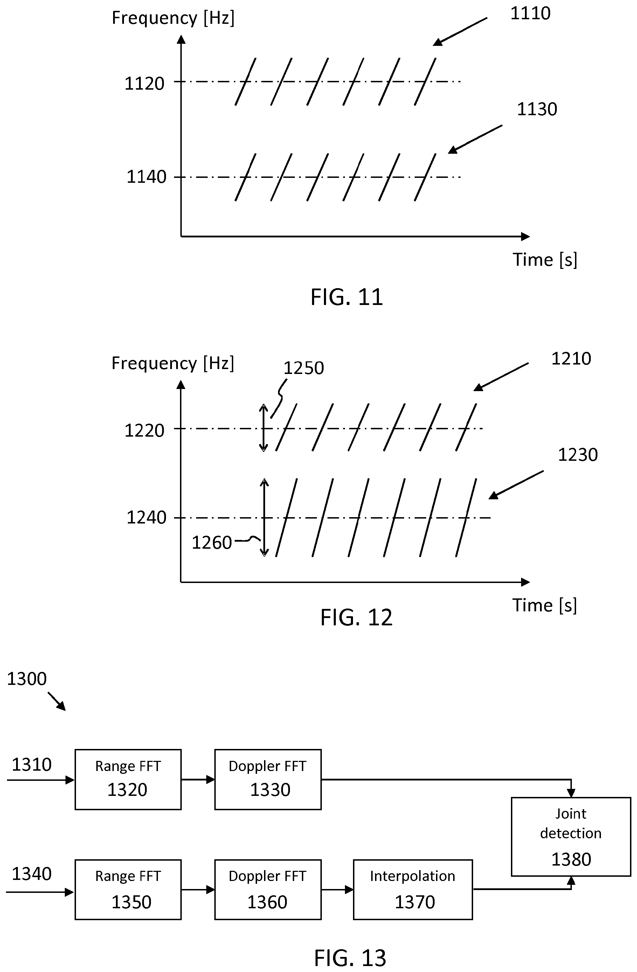

Figure 11 illustrates a comparative example transmission by a radar transceiver 101 where a first waveform 1110 is transmitted at a first center frequency 1120, and where a second waveform 1130 is transmitted at a second center frequency 1140. There is no scaling performed in time domain, which means that the Doppler bins of the two resulting Range-Doppler matrices will not be aligned. I.e., a given Doppler bin in one Range-Doppler matrix will correspond to a different relative target velocity compared to the same Doppler bin in the other Range-Doppler matrix, which may complicate joint detection processing and angle-of-arrival estimation.

However, an interpolation and/or a re-sampling operation can be performed on one or more of the Range-Doppler matrices in order to align the Doppler bins.

A re-sampling in range domain means that the number of range bins is changed, either increased or decreased. This will of course also change the target distance corresponding to each range bin.

A re-sampling in Doppler domain means that the number of Doppler bins is changed, either increased or decreased. This will of course also change the relative target velocity corresponding to each Doppler bin.

An interpolation operation changes the corresponding target range and/or relative velocity based on the values in the adjacent range and/or Doppler bins.

For instance, a Farrow structure, a linear interpolation, or a spline interpolation can be used to align the Doppler bins of the different Range-Doppler matrices such that any given Doppler bin in one matrix corresponds to the same relative target velocity as the same Doppler bin in the other Range-Doppler matrices. Such interpolation and re-sampling methods are known in general and will therefore not be discussed in more detail herein.

Figure 12 shows another comparative example transmission by a radar transceiver where a first waveform 1210 is transmitted at a first center frequency 1220, and where a second waveform 1230 is transmitted at a second center frequency 1240, different from the first center frequency. There is no scaling performed in time domain, which again means that the Doppler bins of the two resulting Range-Doppler matrices will not be aligned, i.e., a given Doppler bin in one Range-Doppler matrix will correspond to a respective relative target velocity, while the same Doppler bin in the other Range-Doppler matrix will correspond to another relative target velocity. Additionally, the second waveform 1230 now has a different bandwidth 1260 compared to the bandwidth 1250 of the first waveform 1210. This means that the range bins in the first Range-Doppler matrix will correspond to different actual ranges in meters compared o the range bins of the second Range-Doppler matrix. A re-sampling and/or an interpolation operation can again be performed in order to align the range bins of the two or more Range-Doppler matrices.

Thus, the interpolation and/or the re-sampling operation can be a two-dimensional re-sampling operation to interpolate and/or re-sample in both range and Doppler domain.

Figure 13 schematically illustrates a comparative radar transceiver processing chain 1300 arranged to determine and to interpolate and/or to re-sample a Range-Doppler matrix for a second waveform in order to align it with the Range-Doppler matrix of a first waveform. The first waveform 1310 is subjected to a range FFT 1320 and to a Doppler FFT 1330. The second waveform 1340 is also subject to a range FFT 1350 and to a Doppler FFT 1360. Thus, a first and a second Range-Doppler matrix is generated, but the second Range-Doppler matrix may not be aligned to the first Range-Doppler matrix in terms of target ranges and/or in terms of relative target velocities. An interpolation module 1370 is arranged to interpolate and/or to re-sample the second Range-Doppler matrix in order to align it to the first Range-Doppler matrix. A joint detection module 1380 then performs target detection and possibly also beamforming based on the aligned first and second Range-Doppler matrices.

To summarize, there is disclosed herein a comparative radar transceiver 101 arranged to transmit a first waveform 1110, 1210 in a first frequency band, and a second waveform 1130, 1230 in a second frequency band different from the first frequency band, and to determine a first Range-Doppler matrix for the first waveform transmission and a second Range-Doppler matrix for the second waveform transmission, the radar transceiver being arranged to interpolate between range bins and/or between Doppler bins in the second Range-Doppler matrix to align the bins to corresponding bins of the first Range-Doppler matrix, thereby compensating for a difference in phase evolution 540, 640 of a target reflection 125 over time for the first waveform compared to the second waveform.

The interpolation operation may be performed in the Doppler domain by interpolating between Doppler bins, and/or in Range domain by interpolating between Range bins.

The interpolation may also involve a re-sampling, i.e., an expansion or a reduction of the number of bins in range and/or Doppler domain.

The radar transceiver is associated with an improved performance when it comes to detecting the complex targets discussed above.

The interpolation and/or re-sampling techniques can be combined with the time domain scaling techniques discussed above in connection to, e.g., Figures 5 and 6.

The first frequency band f1 and the second frequency band f2 are mutually different. Generally this means that the frequency bands f1, f2 according to some aspects can have different center frequencies and/or different bandwidths. The frequency bands f1, f2 can according to some aspects be partly overlapping or be completely spectrally separated.

According to some aspects, a frequency band can in general be determined by means of 3dB bandwidth or a predetermined frequency mask.

## Claims

1. A vehicle radar transceiver (101) for a vehicle (100) travelling on a road, arranged to transmit a first waveform (510, 610) in a first frequency band (f1), and a second waveform (510', 610') in a second frequency band (f2) different from the first frequency band, wherein the second waveform (510', 610') is configured to be scaled in the time domain compared to the first waveform (510, 610) such that a difference in phase evolution (540, 640) of a target reflection (125) over time for the first waveform compared to the second waveform is compensated, where the first waveform (510, 610) and the second waveform (510', 610') are frequency modulated continuous wave (FMCW) chirp sequences, **characterized in that**
the second waveform (610') is configured to be scaled in the time domain by an increased frequency derivative of the FMCW chirp transmission compared to the first waveform (610), and/or the second waveform (510') is configured to be scaled in the time domain by a reduction in transmission bandwidth compared to the first waveform.

2. The radar transceiver (101) according to claim 1, wherein the second waveform (610') is configured to be scaled in the time domain by an increased sampling rate of the FMCW chirp transmission compared to the first waveform (610).

3. The radar transceiver (101) according to any previous claim, wherein the second waveform (510') is configured to be scaled in the time domain by a reduction in a time gap duration between consecutive transmissions.

4. The radar transceiver (101) according to any previous claim, wherein the second waveform (510', 610') is configured to be scaled in the time domain compared to the first waveform (510, 610) by a compression factor corresponding to a relative difference in center wavelength of the first frequency band (f1) and the second frequency band (f2).

5. The radar transceiver (101) according to any previous claim, arranged to determine a first Range-Doppler matrix (710) based on receiving the first waveform (510, 610), and to determine a second Range-Doppler matrix (720) based on receiving the second waveform (510, 610), and to obtain a target detection (140, T1, T2) based on the first Range-Doppler matrix (710) and on the second Range-Doppler matrix (720).

6. The radar transceiver (101) according to claim 5, arranged to obtain the target detection (140, T1, T2) based on the first Range-Doppler matrix (710) and on the second Range-Doppler matrix (720) by selecting the matrix element associated with most energy out of the first Range-Doppler matrix (710) and the second Range-Doppler matrix (720) for each Range-Doppler matrix element.

7. The radar transceiver (101) according to claim 5, arranged to obtain the target detection (140, T1, T2) based on the first Range-Doppler matrix (710) and on the second Range-Doppler matrix (720) by a weighted combination of respective matrix entries from the first Range-Doppler matrix (710) and the second Range-Doppler matrix (720).

8. The radar transceiver (101) according to any previous claim, comprising a plurality of antenna elements configured in an antenna array (105), wherein the radar transceiver is arranged to determine an angle of arrival (122) associated with a detected target (140) based on the a first waveform (510, 610), on the second waveform (510', 610') and on respective SNRs of the first and second waveform for the detected target (140).

9. The radar transceiver (101) according to any previous claim, wherein a center frequency of the first frequency band (f1) and/or a center frequency of the second frequency band (f2) is varied over time.

10. A vehicle (100) comprising the radar transceiver (101) according to any previous claim.

11. A method for detecting a target (140) by a vehicle radar transceiver (101) for a vehicle (100) travelling on a road, the method comprising:
transmitting (S1) a first waveform (510, 610) in a first frequency band (f1), and
transmitting (S2) a second waveform in a second frequency band (f2) different from the first frequency band, wherein the second waveform (510', 610') is configured to be scaled in the time domain compared to the first waveform (510, 610) such that a difference in phase evolution (540, 640) of a target reflection (125) over time for the first waveform compared to the second waveform is compensated, where the first waveform (510, 610) and the second waveform (510', 610') are frequency modulated continuous wave (FMCW) chirp sequences, **characterized in that**
the second waveform (610') is configured to be scaled in the time domain by an increased frequency derivative of the FMCW chirp transmission compared to the first waveform (610), and/or the second waveform (510') is configured to be scaled in the time domain by a reduction in transmission bandwidth compared to the first waveform.

## Patentansprüche

1. Fahrzeugradar-Transceiver (101) für ein Fahrzeug (100), das auf einer Straße fährt, angeordnet zum Senden einer ersten Wellenform (510, 610) in einem ersten Frequenzband (f1) und einer zweiten Wellenform (510', 610') in einem zweiten Frequenzband (f2), das sich von dem ersten Frequenzband unterscheidet, wobei die zweite Wellenform (510', 610') konfiguriert ist, um im Zeitbereich im Vergleich zu der ersten Wellenform (510, 610) skaliert zu werden, sodass ein Unterschied in der Phasenentwicklung (540, 640) einer Zielreflexion (125) im Laufe der Zeit für die erste Wellenform im Vergleich zu der zweiten Wellenform kompensiert wird, wobei die erste Wellenform (510, 610) und die zweite Wellenform (510', 610') frequenzmodulierte Dauerwellen-Chirp-Sequenzen (FMCW-Sequenzen) sind, **dadurch gekennzeichnet, dass**
die zweite Wellenform (610') konfiguriert ist, um im Zeitbereich durch ein erhöhtes Frequenzderivat der FMCW-Chirp-Übertragung im Vergleich zu der ersten Wellenform (610) skaliert zu werden, und/oder die zweite Wellenform (510') konfiguriert ist, um im Zeitbereich durch eine Reduzierung der Übertragungsbandbreite im Vergleich zu der ersten Wellenform skaliert zu werden.

2. Radar-Transceiver (101) nach Anspruch 1, wobei die zweite Wellenform (610') konfiguriert ist, um im Zeitbereich durch eine erhöhte Abtastrate der FMCW-Chirp-Übertragung im Vergleich zu der ersten Wellenform (610) skaliert zu werden.

3. Radar-Transceiver (101) nach einem der vorstehenden Ansprüche, wobei die zweite Wellenform (510') konfiguriert ist, um im Zeitbereich durch eine Verringerung einer Zeitlückendauer zwischen aufeinanderfolgenden Übertragungen skaliert zu werden.

4. Radar-Transceiver (101) nach einem der vorstehenden Ansprüche, wobei die zweite Wellenform (510', 610') konfiguriert ist, um im Zeitbereich im Vergleich zu der ersten Wellenform (510, 610) um einen Kompressionsfaktor skaliert zu werden, der einem relativen Unterschied in der Mittelwellenlänge des ersten Frequenzbandes (f1) und des zweiten Frequenzbandes (f2) entspricht.

5. Radar-Transceiver (101) nach einem der vorstehenden Ansprüche, angeordnet, um eine erste Entfernungs-Doppler-Matrix (710) basierend auf dem Empfangen der ersten Wellenform (510, 610) zu bestimmen, und um eine zweite Entfernungs-Doppler-Matrix (720) basierend auf dem Empfangen der zweiten Wellenform (510, 610) zu bestimmen, und um eine Zielerkennung (140, T1, T2) basierend auf der ersten Entfernungs-Doppler-Matrix (710) und auf der zweiten Entfernungs-Doppler-Matrix (720) zu erhalten.

6. Radar-Transceiver (101) nach Anspruch 5, angeordnet, um die Zielerkennung (140, T1, T2) basierend auf der ersten Entfernungs-Doppler-Matrix (710) und auf der zweiten Entfernungs-Doppler-Matrix (720) zu erhalten, indem das Matrixelement mit der meisten Energie aus der ersten Entfernungs-Doppler-Matrix (710) und der zweiten Entfernungs-Doppler-Matrix (720) für jedes Entfernungs-Doppler-Matrixelement ausgewählt wird.

7. Radar-Transceiver (101) nach Anspruch 5, angeordnet, um die Zielerkennung (140, T1, T2) basierend auf der ersten Entfernungs-Doppler-Matrix (710) und auf der zweiten Entfernungs-Doppler-Matrix (720) durch eine gewichtete Kombination entsprechender Matrixeinträge aus der ersten Entfernungs-Doppler-Matrix (710) und der zweiten Entfernungs-Doppler-Matrix (720) zu erhalten.

8. Radar-Transceiver (101) nach einem der vorstehenden Ansprüche, umfassend eine Vielzahl von Antennenelementen, die in einer Antennenanordnung (105) konfiguriert sind, wobei der Radar-Transceiver angeordnet ist, einen Ankunftswinkel (122), der einem erkannten Ziel (140) zugeordnet ist, basierend auf der ersten Wellenform (510, 610), auf der zweiten Wellenform (510', 610') und auf jeweiligen SNRs der ersten und zweiten Wellenform für das erkannte Ziel (140) zu bestimmen.

9. Radar-Transceiver (101) nach einem der vorstehenden Ansprüche, wobei eine Mittenfrequenz des ersten Frequenzbands (f1) und/oder eine Mittenfrequenz des zweiten Frequenzbands (f2) im Laufe der Zeit variiert wird.

10. Fahrzeug (100), umfassend den Radar-Transceiver (101) nach einem der vorstehenden Ansprüche.

11. Verfahren zum Erfassen eines Ziels (140) durch einen Fahrzeugradar-Transceiver (101) für ein Fahrzeug (100), das auf einer Straße fährt, das Verfahren umfassend:
Übertragen (S1) einer ersten Wellenform (510, 610) in einem ersten Frequenzband (f1), und
Übertragen (S2) einer zweiten Wellenform in einem zweiten Frequenzband (f2), das sich von dem ersten Frequenzband unterscheidet, wobei die zweite Wellenform (510', 610') konfiguriert ist, um im Zeitbereich im Vergleich zu der ersten Wellenform (510, 610) skaliert zu werden, sodass ein Unterschied in der Phasenentwicklung (540, 640) einer Zielreflexion (125) im Laufe der Zeit für die erste Wellenform im Vergleich zu der zweiten Wellenform kompensiert wird, wobei die erste Wellenform (510, 610) und die zweite Wellenform (510', 610') frequenzmodulierte Dauerwellen-Chirp-Sequenzen (FMCW-Sequenzen) sind, **dadurch gekennzeichnet, dass**
die zweite Wellenform (610') konfiguriert ist, um im Zeitbereich durch ein erhöhtes Frequenzderivat der FMCW-Chirp-Übertragung im Vergleich zu der ersten Wellenform (610) skaliert zu werden, und/oder die zweite Wellenform (510') konfiguriert ist, um im Zeitbereich durch eine Reduzierung der Übertragungsbandbreite im Vergleich zu der ersten Wellenform skaliert zu werden.

## Revendications

1. Émetteur-récepteur radar de véhicule (101) pour un véhicule (100) circulant sur une route, agencé pour émettre une première forme d'onde (510, 610) dans une première bande de fréquences (f1), et une seconde forme d'onde (510', 610') dans une seconde bande de fréquences (f2) différente de la première bande de fréquences, dans lequel la seconde forme d'onde (510', 610') est configurée pour être mise à l'échelle dans le domaine temporel par comparaison avec la première forme d'onde (510, 610) de telle sorte qu'une différence d'évolution de phase (540, 640) d'une réflexion de cible (125) au fil du temps pour la première forme d'onde par rapport à la seconde forme d'onde est compensée, où la première forme d'onde (510, 610) et la seconde forme d'onde (510', 610') sont des séquences chirp à ondes continues modulées en fréquence (FMCW), **caractérisé en ce que**
la seconde forme d'onde (610') est configurée pour être mise à l'échelle dans le domaine temporel par une dérivée de fréquence accrue de l'émission chirp FMCW par comparaison avec la première forme d'onde (610), et/ou la seconde forme d'onde (510') est configurée pour être mise à l'échelle dans le domaine temporel par une réduction de largeur de bande d'émission par comparaison avec la première forme d'onde.

2. Émetteur-récepteur radar (101) selon la revendication 1, dans lequel la seconde forme d'onde (610') est configurée pour être mise à l'échelle dans le domaine temporel par un taux d'échantillonnage accru de l'émission chirp FMCW par comparaison avec la première forme d'onde (610).

3. Émetteur-récepteur radar (101) selon l'une quelconque revendication précédente, dans lequel la seconde forme d'onde (510') est configurée pour être mise à l'échelle dans le domaine temporel par une réduction d'une durée d'intervalle de temps entre des émissions consécutives.

4. Émetteur-récepteur radar (101) selon l'une quelconque revendication précédente, dans lequel la seconde forme d'onde (510', 610') est configurée pour être mise à l'échelle dans le domaine temporel par comparaison avec la première forme d'onde (510, 610) d'un facteur de compression correspondant à une différence relative de longueur d'onde centrale de la première bande de fréquences (f1) et de la seconde bande de fréquences (f2).

5. Émetteur-récepteur radar (101) selon l'une quelconque revendication précédente, agencé pour déterminer une première matrice Doppler à distance (710) en fonction de la réception de la première forme d'onde (510, 610), et pour déterminer une seconde matrice Doppler à distance (720) en fonction de la réception de la seconde forme d'onde (510, 610), et pour obtenir une détection de cible (140, T1, T2) en fonction de la première matrice Doppler à distance (710) et de la seconde matrice Doppler à distance (720).

6. Émetteur-récepteur radar (101) selon la revendication 5, agencé pour obtenir la détection de cible (140, T1, T2) en fonction de la première matrice Doppler à distance (710) et de la seconde matrice Doppler à distance (720) en choisissant l'élément de matrice associé à la plus grande quantité d'énergie parmi la première matrice Doppler à distance (710) et la seconde matrice Doppler à distance (720) pour chaque élément de matrice Doppler à distance.

7. Émetteur-récepteur radar (101) selon la revendication 5, agencé pour obtenir la détection de cible (140, T1, T2) en fonction de la première matrice Doppler à distance (710) et de la seconde matrice Doppler à distance (720) par une combinaison pondérée d'entrées de matrice respectives provenant de la première matrice Doppler à distance (710) et de la seconde matrice Doppler à distance (720).

8. Émetteur-récepteur radar (101) selon l'une quelconque revendication précédente, comprenant une pluralité d'éléments d'antenne configurés dans un réseau d'antennes (105), dans lequel l'émetteur-récepteur radar est agencé pour déterminer un angle d'arrivée (122) associé à une cible détectée (140) en fonction d'une première forme d'onde (510, 610), de la seconde forme d'onde (510', 610') et des SNR respectifs de la première et de la seconde forme d'onde pour la cible détectée (140).

9. Émetteur-récepteur radar (101) selon l'une quelconque revendication précédente, dans lequel une fréquence centrale de la première bande de fréquences (f1) et/ou une fréquence centrale de la seconde bande de fréquences (f2) sont variées au fil du temps.

10. Véhicule (100) comprenant l'émetteur-récepteur radar (101) selon l'une quelconque revendication précédente.

11. Procédé de détection d'une cible (140) par un émetteur-récepteur radar de véhicule (101) pour un véhicule (100) circulant sur une route, le procédé comprenant :
l'émission (S1) d'une première forme d'onde (510, 610) dans une première bande de fréquences (f1), et
l'émission (S2) d'une seconde forme d'onde dans une seconde bande de fréquences (f2) différente de la première bande de fréquences, dans lequel la seconde forme d'onde (510', 610') est configurée pour être mise à l'échelle dans le domaine temporel par comparaison avec la première forme d'onde (510, 610) de telle sorte qu'une différence d'évolution de phase (540, 640) d'une réflexion de cible (125) au fil du temps pour la première forme d'onde par rapport à la seconde forme d'onde est compensée, où la première forme d'onde (510, 610) et la seconde forme d'onde (510', 610') sont des séquences chirp à ondes continues modulées en fréquence (FMCW), **caractérisé en ce que**
la seconde forme d'onde (610') est configurée pour être mise à l'échelle dans le domaine temporel par une dérivée de fréquence accrue de l'émission chirp FMCW par comparaison avec la première forme d'onde (610), et/ou la seconde forme d'onde (510') est configurée pour être mise à l'échelle dans le domaine temporel par une réduction de largeur de bande d'émission par comparaison avec la première forme d'onde.
